# EUROPEAN PATENT SPECIFICATION

(11) **EP 4 240 058 B1**
(45) Date of publication and mention of the grant of the patent: **25.03.2026**
(21) Application number: 23154717.5
(22) Date of filing: 02.02.2023
(51) Int. Cl.: H04W 36/00

(54) **ENHANCED HANDLING FOR SESSION CONTINUITY**
VERBESSERTE HANDHABUNG FÜR SITZUNGSKONTINUITÄT
GESTION AMÉLIORÉE DE CONTINUITÉ DE SESSION

(30) Priority: 09.02.2022 US 202263308178 P; 31.01.2023 US 202318103800
(43) Date of publication of application: 06.09.2023
(73) Proprietor: MEDIATEK INC., Hsinchu City 30078 (TW)
(72) Inventor: HUANG-FU, Chien-Chun, 30078 Hsinchu City (TW); CHEN, Bo-Hun, 30078 Hsinchu City (TW); LI, Shang-Wu, 30078 Hsinchu City (TW); GAO, Yu-Kai, 30078 Hsinchu City (TW)
(74) Representative: Hoefer & Partner Patentanwälte mbB

(56) References cited:
- US-A1- 2020 329 397
- "3rd Generation Partnership Project; Technical Specification Group Core Network and Terminals; Non-Access-Stratum (NAS) protocol for Evolved Packet System (EPS); Stage 3 (Release 17))", 29 December 2021 (2021-12-29), XP052096653, Retrieved from the Internet <URL:https://ftp.3gpp.org/tsg_ct/WG1_mm-cc-sm_ex-CN1/TSGC1_133e/Draft%20specs%20after%20CT%2394e/Uploaded/draft-24301-h50-cl.zip draft-24301-h50.docx> [retrieved on 20211229]

## Description

### CROSS REFERENCE TO RELATED APPLICATIONS

This application claims priority under 35 U.S.C. §119 from U.S. Provisional Application Number 63/308,178, entitled "Enhanced Handling for Session Continuity", filed on February 9, 2023.

### TECHNICAL FIELD

The disclosed embodiments relate generally to wireless communication, and, more particularly, to method of supporting session continuity when UE performs system interworking from A/Gb or Iu mode to S1 mode.

### BACKGROUND

The wireless communications network has grown exponentially over the years. A Long-Term Evolution (LTE) system offers high peak data rates, low latency, improved system capacity, and low operating cost resulting from simplified network architecture. LTE systems, also known as the 4G system, also provide seamless integration to older wireless network, such as GSM, CDMA and Universal Mobile Telecommunication System (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3^{rd} generation partner project (3GPP) network normally includes a hybrid of 2G/3G/4G systems. The Next Generation Mobile Network (NGMN) board has decided to focus the future NGMN activities on defining the end-to-end requirements for 5G new radio (NR) systems (5GS). 3GPP TS 24.301 V17.5.0 specifies the procedures used by the protocols for mobility management and session management between User Equipment (UE) and Mobility Management Entity (MME) in the Evolved Packet System (EPS). These protocols belong to the non-access stratum (NAS).

In 4G evolved packet system (EPS), a Packet Data Network (PDN) connectivity procedure is an important process when LTE communication system accesses to the packet data network. The purpose of PDN connectivity procedure is to setup a default EPS bearer between a UE and the packet data network. In 5G, a Protocol Data Unit (PDU) session establishment is a parallel procedure of the PDN connectivity procedure in 4G. A PDU session defines the association between the UE and the data network that provides a PDU connectivity service. If a UE supports interworking and the UE performs inter-system change from S1 mode to A/Gb (2G) or Iu (3G, UMTS) mode, UE uses parameters from each active EPS bearer context to activate a corresponding PDP context.

Upon the inter-system change from A/Gb mode or Iu mode to S1 mode, for the PDN connection which doesn't support interworking with 5GS, the UE may initiate the PDN disconnection procedure and then initiate the UE requested PDN connectivity procedure. However, this procedure may incur unnecessary signalling overhead, especially for the case that multiple PDN connections are required to be re-established.

A solution is sought.

### SUMMARY

A method and a user equipment according to the invention are defined in the independent claims. The dependent claims define preferred embodiments thereof. In particular, the user equipment according to the invention is preferably adapted to perform the steps of the method according to the invention. The invention is defined by the appended claims. Aspects or embodiments of the disclosure which do not fall under the scope of the claims are not included in the scope of the invention.

A method of enhancing session continuity for system interworking is proposed. Upon inter-system change from A/Gb mode or Iu mode to S1 mode, for any PDN connection that has been transferred, if the PDN connection is not associated with a PDU session ID (PSI) and a UE supporting N1 mode decides to enable the transfer of the PDN connection from S1 mode to N1 mode, the UE may first initiate UE requested PDN disconnection procedure(s) and then UE requested PDN connectivity procedure(s) for such PDN connection(s). The UE identifies one or more PDN connections that do not support interworking with 5GS. In one novel aspect, the UE deactivates all EPS bearer contexts for such PDN connection(s) locally, includes the EPS bearer context status IE in a TRACKING AREA UPDATE REQUEST message of a tracking area update (TAU) procedure upon inter-system change from A/Gb mode or Iu mode to S1 mode, and then initiates the UE requested PDN connectivity procedure(s) for such PDN connection(s). Furthermore, if no EPS bearer exists after local deactivation and EMM-REGISTERED without PDN connection is not supported by the UE, then the UE initiates a re-attach procedure followed by the UE requested PDN connectivity procedure(s) for such PDN connection(s). Each of the one or more identified PDN connections is associated to a corresponding EPS bearer having an EPS bearer ID (EBI).

In one embodiment, a UE performs an inter-system change from A/Gb or Iu mode to S1 mode in a mobile communication network, wherein the UE maintains multiple Packet Data Network (PDN) connections in S1 mode. The UE identifies one or more PDN connections that do not support interworking with 5GS. The UE locally releases the one or more PDN connections and deactivating evolved packet system (EPS) bearer contexts associated with the one or more PDN connections. The UE performs a tracking area update (TAU) procedure with the network for deactivating all the EPS bearer contexts associated with the one or more PDN connections. The UE initiates one or more UE-requested PDN connectivity procedures to establish PDN connections that support interworking with 5GS. Each of the one or more identified PDN connections is associated to a corresponding EPS bearer having an EPS bearer ID, in the following also referred to as EBI.

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates an exemplary mobile communication network and inter-system change for multiple Packet Data Network (PDN) connections with session continuity in accordance with one novel aspect.
Figure 2 illustrates simplified block diagrams of a user equipment (UE) and a network entity in accordance with embodiments of the current invention.
Figure 3 illustrates a first embodiment of UE behavior upon inter-system change from 2/3G to 4G for PDN connections that do not support interworking with 5GS in one novel aspect.
Figure 4 illustrates a second embodiment of UE behavior upon inter-system change from 2/3G to 4G for PDN connections that do not support interworking with 5GS in one novel aspect.
Figure 5 illustrates a sequence flow between a UE and a PLMN1 and a PLMN2 for PDN connection establishment, EPS bearer activation and deactivation during inter-system change with session continuity not being according to the claimed invention, but useful for highlighting specific aspects thereof.
Figure 6 is a flow chart of a method of supporting interworking from 2G/3G to 4G with session continuity for multiple PDN connections in accordance with one novel aspect of the present invention.

### DETAILED DESCRIPTION

Reference will now be made in detail to some embodiments of the invention, examples of which are illustrated in the accompanying drawings.

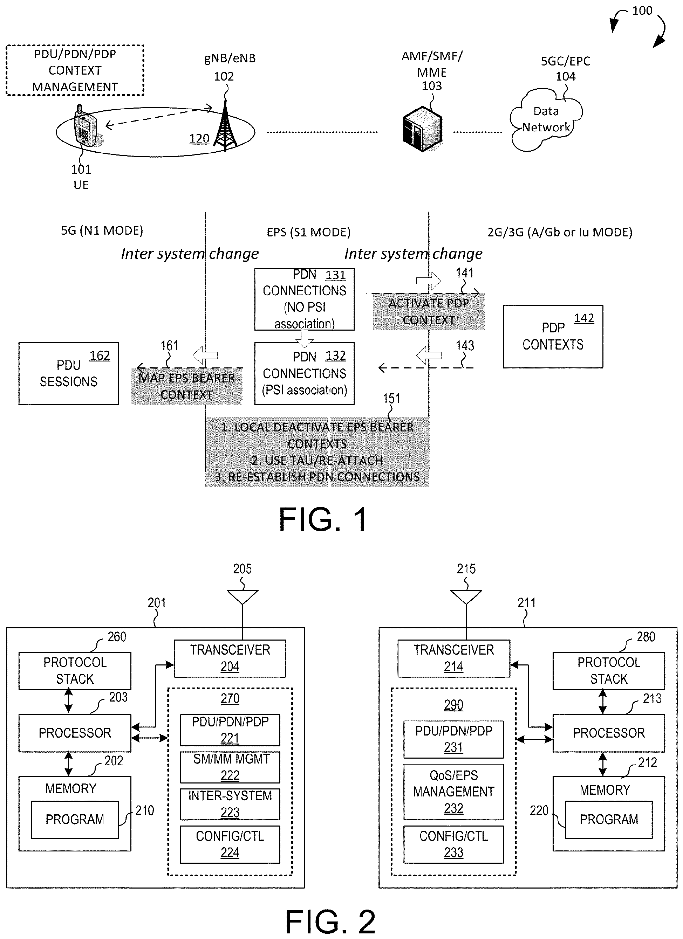

Figure 1 illustrates an exemplary mobile communication network 100 and inter-system change for multiple Packet Data Network (PDN) connections with session continuity in accordance with one novel aspect. Mobile communication network 100 comprises a user equipment UE 101, a base station gNB/eNB 102, an Access and Mobility Management Function (AMF), Session Management Function (SMF), or mobility management entity (MME) 103, and a 5G/4G core network 5GC/EPC 104. In the example of Figure 1, UE 101 and its serving base station gNB 102 belong to part of a radio access network RAN 120. In Access Stratum (AS) layer, RAN 120 provides radio access for UE 101 via a radio access technology (RAT). In Non-Access Stratum (NAS) layer, AMF/SMF/MME 103 communicates with gNB 102 and 5GC/EPC 104 for access and mobility management and PDU session management of wireless access devices in network 100. UE 101 may be equipped with a radio frequency (RF) transceiver or multiple RF transceivers for different application services via different RATs/CNs. UE 101 may be a smart phone, a wearable device, an Internet of Things (IoT) device, and a tablet, etc.

EPS networks are packet-switched (PS) Internet Protocol (IP) networks. This means that the networks deliver all data traffic in IP packets, and provide users with IP Connectivity. When UE joins a 5GS network, a Packet Data Network (PDN) address (i.e., the one that can be used on the PDN) is assigned to the UE for its connection to the PDN. In 4G, a PDN connectivity procedure is an important procedure to setup a Default EPS Bearer between a UE and the packet data network. EPS has defined the Default EPS Bearer to provide the IP Connectivity. In 5G, a Protocol Data Unit (PDU) session establishment procedure is a parallel procedure of a PDN connectivity procedure in 4G. A PDU session defines the association between the UE and the data network that provides a PDU connectivity service.

If a UE supports interworking and the UE performs inter-system change from S1 (4G) mode to A/Gb (2G) or Iu (3G, UMTS) mode, the UE uses parameters from each active EPS bearer context to activate a corresponding PDP context. Upon the inter-system change from A/Gb mode or Iu mode to S1 mode, for the PDN connection which doesn't support interworking with 5GS (e.g., does not have a PSI association), the UE may initiate the PDN disconnection procedure and then initiate the UE requested PDN connectivity procedure. However, this procedure may incur unnecessary signalling overhead, especially for the case that multiple PDN connections are required to be re-established.

In the example of Figure 1, UE 101 maintains a number of PDN connections in EPS, each PDN connection is associated with a default EPS bearer, which is identified by an EPS bearer ID (EBI). If UE 101 lost 4G signal and only has 2/3G signal, UE 101 may perfrom inter-system change from S1 mode to A/Gb mode (2G) or Iu mode (3G) (141). Accordingly, UE 101 may activate 2/3G PDP contexts (142) by using parameters from EPS bearer contexts of the number of PDN connections. Later on, UE 101 may perform inter-system change from A/Gb mode (2G) or Iu mode (3G) back to S1 mode (143), and the activated PDP contexts are converted back to the number of PDN connections (131). If some of the PDN connections do not support interworking with 5GS (e.g., no PSI association), then UE 101 may want to enable the transfer of the PDN connections from S1 mode to N1 mode.

In accordance with one novel aspect, UE 101 performs the following steps to enable the transfer of the PDN connections from S1 mode to N1 mode (151). First, UE 101 locally deactivates all EPS bearer contexts for the PDN connections that do not have PSI association. Second, UE 101 includes the EPS bearer context status IE in a TRACKING AREA UPDATE REQUEST message of a tracking area updating (TAU) procedure upon inter-system change from A/Gb mode or Iu mode to S1 mode. The EPS bearer status IE indicates which EPS bearer contexts to be deactivated by the network. Third, UE 101 initiates one or more UE requested PDN connectivity procedures for those PDN connections. Furthermore, if no EPS bearer exists after the local deactivation and EMM-REGISTERED without PDN connection is not supported by the UE, then UE 101 initiates a re-attach procedure followed by the one or more UE requested PDN connectivity procedures for those PDN connections. As a result, UE 101 does not need to disconnect each PDN connection individually, which reduces signaling overhead. The re-established PDN connections (132) can be transferred to corresponding PDU sessions (162) upon inter-system change from S1 mode to N1 mode (161).

Figure 2 illustrates simplified block diagrams of wireless devices, e.g., a UE 201 and a network entity 211 in accordance with embodiments of the current invention. Network entity 211 may be a base station and/or an AMF/SMF/MME/SGSN/RAN. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes protocol stack 280 and a set of control functional modules and circuit 290. PDU session and PDN connection and PDP context handling circuit 231 handles PDU/PDN/PDP establishment and modification procedures. QoS and EPS bearer management circuit 232 creates, modifies, and deletes QoS and EPS bearers for UE. Configuration and control circuit 233 provides different parameters to configure and control UE of related functionalities including mobility and session management and PDU/PDN/PDP management.

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor in associated with software may be used to implement and configure features of UE 201.

UE 201 also comprises a set of functional modules and control circuits to carry out functional tasks of UE 201. Protocol stacks 260 comprise Non-Access-Stratum (NAS) layer to communicate with an AMF/SMF/MME/SGSN entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. System modules and circuits 270 may be implemented and configured by software, firmware, hardware, and/or combination thereof. The function modules and circuits, when executed by the processors via program instructions contained in the memory, interwork with each other to allow UE 201 to perform embodiments and functional tasks and features in the network.

In one example, system modules and circuits 270 comprise PDU session, PDN connection, and PDP context handling circuit 221 that performs PDU session and PDN connection establishment and modification procedures with the network, a session and mobility management circuit 222 that manages session and mobility parameters, an inter-system handling circuit 223 that handles inter-system change functionalities, and a config and control circuit 224 that handles configuration and control parameters for session and mobility management. In one novel aspect, upon inter-system change from 2/3G to 4G, UE 201 utilizes a TAU procedure to deactivate all EPS bearer contexts of PDN connections that do not support interworking with 5GS, to reduce signaling overhead.

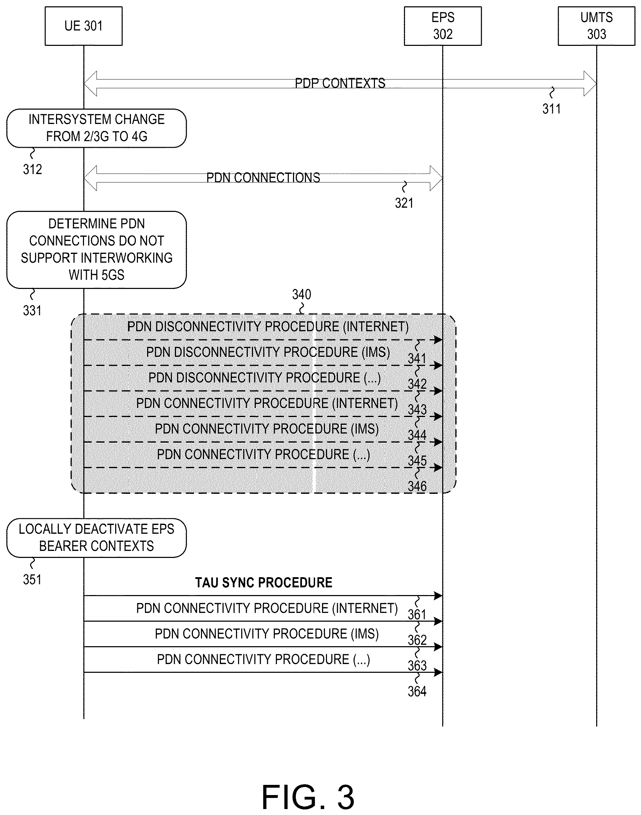

Figure 3 illustrates a first embodiment of UE behavior upon inter-system change from 2/3G to 4G for PDN connections that do not support interworking with 5GS in one novel aspect. In step 311, UE 301 maintains a number of PDP contexts in UMTS 303. In step 312, UE 301 performs inter-system change from UMTS 303 to EPS 302 (from 2/3G to 4G). The number of PDP contexts are transferred to EPS bearers of corresponding PDN connections in EPS (step 321). In step 331, UE 301 determines which PDN connections do not support interworking with 5GS, e.g., a PDN connection that is not associated with a PDU session ID (PSI). For example, UE 301 may find at least three PDN connections (internet, IMS, other service, etc.) that do not support interworking with 5GS. Since UE 301 supports N1 mode, UE 301 decides to enable the transfer of those PDN connections from S1 mode to N1 mode, by first releasing those PDN connections, and then re-establish the PDN connections with interworking capability.

Traditionally, upon the inter-system change from A/Gb mode or Iu mode to S1 mode, for any PDN connection that has been transferred, if a PDN connection is not associated with a PDU session ID, then UE may first initiate a UE requested PDN disconnection procedure and then a UE requested PDN connectivity procedure, for each of the PDN connections. For example, as depicted by box 340, in step 341, UE 301 initiates a first PDN dis-connectivity procedure to disconnect the PDN connection for internet service. In step 342, UE 301 initiates a second PDN dis-connectivity procedure to disconnect the PDN connection for IMS service. In step 343, UE 301 initiates a third PDN dis-connectivity procedure to disconnect the PDN connection for other service. After the PDN connections are disconnected, in step 343, UE 301 initiates a first UE-requested PDN connectivity procedure for internet service. In step 344, UE 301 initiates a second UE-requested PDN connectivity procedure for IMS service. In step 345, UE 301 initiates a third UE-requested PDN connectivity procedure for other service. In can be seen that for each PDN connection that does not support interworking with 5GS, UE 301 needs to initiate a PDN dis-connectivity procedure and a PDN connectivity procedure.

In accordance with one novel aspect, UE may deactivate all EPS bearer contexts for such PDN connections locally, include the EPS bearer context status IE in the TRACKING AREA UPDATE REQUEST message of the tracking area updating procedure upon inter-system change from A/Gb mode or Iu mode to S1 mode, and then initiate UE requested PDN connectivity procedure for such PDN connection(s). As depicted in Figure 3, in step 351, UE 301 locally deactivates all EPS bearer contexts for those PDN connections that do not support interworking with 5GS. In step 361, UE 301 initiates tracking area update (TAU) procedure to sync with the EPS bearer context status with EPS 302, by sending a tracking area update request message to EPS 302 upon/after inter-system change to S1 mode. The TAU request message includes an EPS bearer context status IE, which contains all the EBIs of the EPS bearer contexts for those PDN connections to be disconnected. After the PDN connections are disconnected (e.g., EPS bearer contexts are deactivated), in step 362, UE 301 initiates a first UE-requested PDN connectivity procedure for internet service. In step 363, UE 301 initiates a second UE-requested PDN connectivity procedure for IMS service. In step 364, UE 301 initiates a third UE-requested PDN connectivity procedure for other service. In can be seen that as compared to three individual PDN dis-connectivity procedures, UE 301 only needs one TAU SYNC procedure, which reduces signaling overhead.

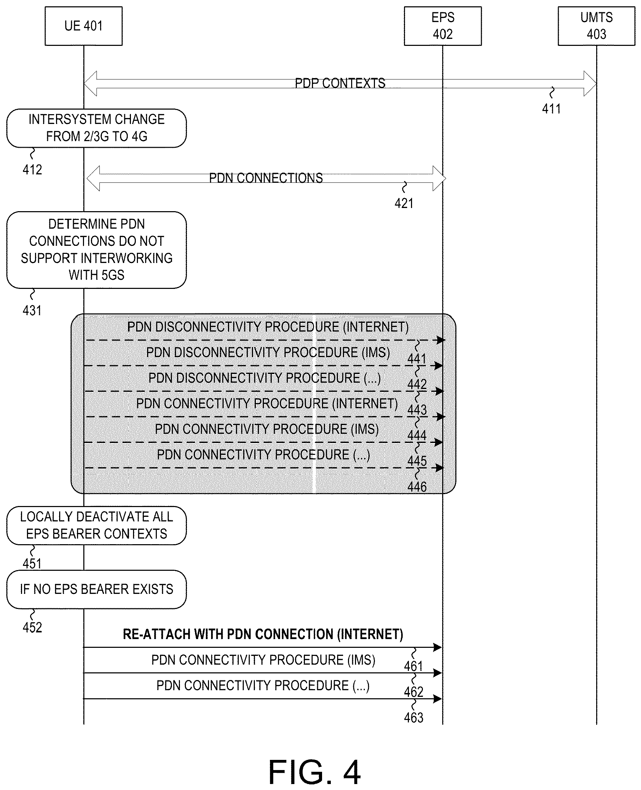

Figure 4 illustrates a second embodiment of UE behavior upon inter-system change from 2/3G to 4G for PDN connections that does not support interworking with 5GS in one novel aspect. Steps 411 to 451 of Figure 4 are similar to steps 311 to 351 of Figure 3. In the example of Figure 3, some PDN connections do not support interworking with 5GS, and there are remaining PDN connections support interworking with 5GS. However, in the example of Figure 4, ALL the PDN connections do not support interworking with 5GS. As a result, after step 451, UE 401 has locally deactivated ALL EPS bearer contexts, and UE 401 determines that there are no EPS bearers exist (e.g., ALL the PDN connections are released) (step 452). If EMM-RESIGERED without PDN connection is not supported by the UE, then the UE needs to re-attach to the EPS network to establish the first PDN connection. In step 461, UE 401 re-attach to EPS 402 to establish a first PDN connection for internet service. In step 462, UE 401 initiates a UE-requested PDN connectivity procedure for IMS service. In step 463, UE 301 initiates another UE-requested PDN connectivity procedure for other service. In can be seen that UE 401 only needs one RE-ATTACH procedure, as compared to three individual PDN dis-connectivity procedures, and reduces signaling overhead.

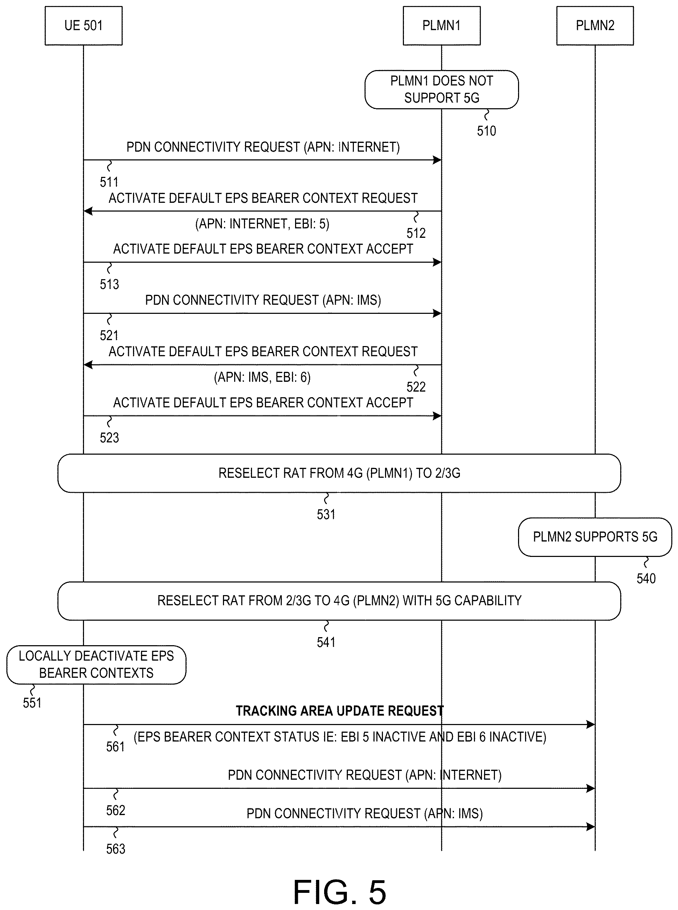

Figure 5 illustrates a sequence flow between a UE and a PLMN1 and a PLMN2 for PDN connection establishment, EPS bearer activation and deactivation during inter-system change with session continuity. In the example of Figure 5, UE 501 selects a RAT (4G) in PLMN1, which does not support 5G (step 510). In step 511, UE 501 initiates a UE-requested PDN connectivity procedure for internet service, e.g., sends a PDN connectivity request message (APN: Internet) in PLMN1. In step 512, UE 501 receives an ACTIVATE DEFAULT_EPS_BEARER_CONTEXT_REQUEST message (APN: Internet, EBI=5) in response to the PDN connectivity procedure. In step 513, UE 501 sends an ACTIVATE DEFAULT_EPS_BEARER_CONTEXT_ACCEPT message to PLMN1 to complete the PDN connectivity procedure for Internet service in PLMN1. Similarly, in step 521, UE 501 initiates a UE-requested PDN connectivity procedure for IMS service, e.g., sends a PDN connectivity request message (APN: IMS) to PLMN1. In step 522, UE 501 receives an ACTIVATE DEFAULT_EPS_BEARER_CONTEXT_REQUEST message (APN: IMS, EBI=6) in response to the PDN connectivity procedure. In step 523, UE 501 sends an ACTIVATE_DEFAULT_EPS_BEARER CONTEXT_ACCEPT message to PLMN1 to complete the PDN connectivity procedure for IMS service. UE 501 may follow the same procedure to establish more PDN connections in PLMN1 for other services.

In step 531, UE 501 reselects RAT from 4G (PLMN1) to 2/3G. For inter-system change from S1 mode to A/Gb mode or Iu mode, UE uses parameters from each active EPS bearer context to activate a corresponding PDP context. For example, SM uses the following parameters from each active EPS bearer context: EPS bearer identity to map to NSAPI; linked PES bearer identity (if available) to map to linked TI; PDN address and APN of the default PES bearer context to map to PDP address and APN of the default PDP context; TFT of the default EPS bearer context, if any, to map to the TFT of the default PDP context; TFTs of the dedicated EPS bearer contexts to map to TFTs of the secondary PDP contexts; and GERAN/UTRAN parameters are provided by the MME while on E-UTRAN access. The MME performs the mapping from EPS to R99 QoS parameters.

In the example of Figure 5, PLMN2 supports 5G (540). Later on, in step 541, UE 501 reselects back from 2/3G to 4G (PLMN2) with 5G capability. Upon the inter-system change to 4G, the PDP contexts in 2/3G are transferred to EPS bearers of PDN connections in 4G. Since some PDN connections may not support interworking with 5GS, UE 501 needs to enable the transfer of those PDN connections from S1 mode to N1 mode. In step 551, UE 501 locally deactivates the EPS bearer contexts corresponding to those PDN connections that do not support interworking with 5GS. In one novel aspect, instead of initiating a PDN dis-connectivity procedure to release each PDN connection individually, UE 501 initiates a tracking area update procedure, e.g., sends a TAU REQUEST message to the network (step 561). The TAU REQUEST message includes an EPS BEARER CONTEXT STATUS IE, which indicates all the EPS bearer contexts correspond to those PDN connections (e.g., EPS bearer with EBI=5 and EBI=6) need to be deactivated. UE 501 then establishes the PDN connections by sending a PDN connectivity request message (APN: INTERNET) in step 562, and sending a PDN connectivity request message (APN: IMS) in step 563.

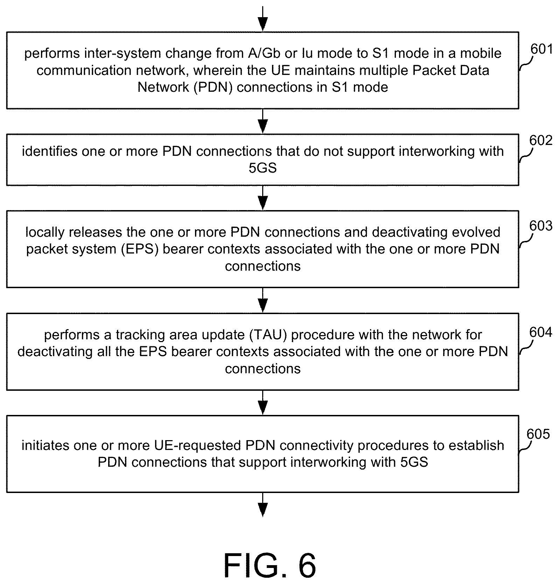

Figure 6 is a flow chart of a method of supporting interworking from 2G/3G to 4G with session continuity for multiple PDN connections in accordance with one novel aspect of the present invention. In step 601, a UE performs an inter-system change from A/Gb or Iu mode to S1 mode in a mobile communication network, wherein the UE maintains multiple Packet Data Network (PDN) connections in S1 mode. In step 602, the UE identifies one or more PDN connections that do not support interworking with 5GS. In step 603, the UE locally releases the one or more PDN connections and deactivating evolved packet system (EPS) bearer contexts associated with the one or more PDN connections. In step 604, the UE performs a tracking area update (TAU) procedure with the network for deactivating all the EPS bearer contexts associated with the one or more PDN connections. In step 605, the UE initiates one or more UE-requested PDN connectivity procedures to establish PDN connections that support interworking with 5GS. In one embodiment, no PES bearer exists after the UE locally deactivated the EPS bearer contexts associated with the one or more PDN connections, and the UE initiates a re-attach procedure to establish a first PDN connection that supports interworking with 5GS.

## Claims

1. A method, comprising:
performing an inter-system change from A/Gb or lu mode to S1 mode by a User Equipment, in the following also referred to as UE, in a mobile communication network, wherein the UE maintains multiple Packet Data Network, in the following also referred to as PDN, connections in S1 mode (601);
identifying one or more PDN connections that do not support interworking with 5GS (602);
locally releasing the one or more PDN connections and deactivating evolved packet system, in the following also referred to as EPS, bearer contexts associated with the one or more PDN connections (603);
performing a tracking area update, in the following also referred to as TAU, procedure with the network for deactivating all the EPS bearer contexts associated with the one or more PDN connections (604); and
initiating one or more UE-requested PDN connectivity procedures to establish PDN connections that support interworking with 5GS (605);
wherein each of the one or more identified PDN connections is associated to a corresponding EPS bearer having an EPS bearer ID, in the following also referred to as EBI.

2. A User Equipment, in the following also referred to as UE, (201), comprising:
an inter-system change handling circuit (223) that is configured to perform an inter-system change from A/Gb or lu mode to S1 mode in a mobile communication network, wherein the UE is configured to maintain multiple Packet Data Network, in the following also referred to as PDN, connections in S1 mode;
a control circuit (224) that is configured to identify one or more PDN connections that do not support interworking with 5GS, wherein the UE is configured to locally release the one or more PDN connections and deactivate evolved packet system, in the following also referred to as EPS, bearer contexts associated with the one or more PDN connections;
a mobility management circuit (222) that is configured to perform a tracking area update, in the following also referred to as TAU, procedure with the network for deactivating all the EPS bearer contexts associated with the one or more PDN connections; and
a PDN connection handling circuit (221) that is configured to initiate one or more UE-requested PDN connectivity procedures to establish PDN connections that support interworking with 5GS;
wherein each of the one or more identified PDN connections is associated to a corresponding EPS bearer having an EPS bearer ID, in the following also referred to as EBI.

3. The method of Claim 1 or the UE of Claim 2, wherein the identified one or more PDN connections do not have a PDU session ID, in the following also referred to as PSI, association.

4. The method of any one of Claims 1 and 3, or the UE of any one of Claims 2 and 3, wherein the UE sends a TAU request message that comprises EBIs of all the EPS bearer contexts associated with the one or more PDN connections.

5. The method of any one of Claims 1 and 3 to 4, or the UE of any one of Claims 2 to 4, wherein the UE releases the one or more PDN connections without sending individual PDN dis-connectivity request for each of the one or more PDN connections.

6. The method of any one of Claims 1 and 3 to 5, or the UE of any one of Claims 2 to 5, wherein no EPS bearer exists after the UE locally deactivated the EPS bearer contexts associated with the one or more PDN connections.

7. The method of Claim 6, or the UE of Claim 6, wherein the UE initiates a re-attach procedure to establish a first PDN connection that supports interworking with 5GS.

8. The method of any one of Claims 1 and 3 to 7, or the UE of any one of Claims 2 to 7, wherein the UE performs the TAU procedure upon the inter-system change from A/Gb or Iu mode to S1 mode.

9. The method of any one of Claims 1 and 3 to 7, or the UE of any one of Claims 2 to 7, wherein the UE performs the TAU procedure after the inter-system change from A/Gb or lu mode to S1 mode is completed.

## Patentansprüche

1. Verfahren, umfassend:
Durchführen eines Wechsels zwischen Systemen vom A/Gb- oder lu-Modus in den S1-Modus durch ein Benutzergerät, im Folgenden auch als UE bezeichnet, in einem Mobilkommunikationsnetzwerk, wobei das UE mehrere Paketdatennetzwerk, im Folgenden auch als PDN bezeichnet, -Verbindungen im S1-Modus unterhält (601);
Identifizieren einer oder mehrerer PDN-Verbindung(en), die keine Zusammenarbeit mit 5GS unterstützen (602);
lokales Freigeben der einen oder mehreren PDN-Verbindung(en) und Deaktivieren von Evolved-Packet-System, im Folgenden auch als EPS bezeichnet, -Trägerkontexten, die mit der einen oder den mehreren PDN-Verbindung(en) assoziiert sind (603);
Durchführen einer Verfolgungsbereichsaktualisierung, im Folgenden auch als TAU bezeichnet, -Prozedur mit dem Netzwerk zum Deaktivieren aller EPS-Trägerkontexte, die mit der einen oder den mehreren PDN-Verbindung(en) assoziiert sind (604); und
Initiieren einer oder mehrerer UE-angeforderter PDN-Konnektivitätsprozeduren, um PDN-Verbindungen herzustellen, die eine Zusammenarbeit mit 5GS unterstützen (605);
wobei jede der einen oder mehreren identifizierten PDN-Verbindung(en) mit einem entsprechenden EPS-Träger assoziiert ist, der eine EPS-Träger-ID, im Folgenden auch als EBI bezeichnet, aufweist.

2. Benutzerausrüstung, im Folgenden auch als UE bezeichnet, (201), umfassend:
eine Verarbeitungsschaltung für Wechsel zwischen Systemen (223), die konfiguriert ist, um einen Wechsel zwischen Systemen vom A/Gb- oder lu-Modus in den S1-Modus in einem Mobilkommunikationsnetzwerk durchzuführen, wobei das UE konfiguriert ist, um mehrere Paketdatennetzwerk, im Folgenden auch als PDN bezeichnet, -Verbindungen im S1-Modus zu unterhalten;
eine Steuerschaltung (224), die konfiguriert ist, um eine oder mehrere PDN-Verbindung(en) zu identifizieren, die keine Zusammenarbeit mit 5GS unterstützen, wobei das UE konfiguriert ist, um die eine oder mehreren PDN-Verbindung(en) lokal freizugeben und Evolved-Packet-System, im Folgenden auch als EPS bezeichnet, -Trägerkontexte, die mit der einen oder den mehreren PDN-Verbindung(en) assoziiert sind, zu deaktivieren;
eine Mobilitätsverwaltungsschaltung (222), die konfiguriert ist, um eine Verfolgungsbereichsaktualisierung, im Folgenden auch als TAU bezeichnet, -Prozedur mit dem Netzwerk zum Deaktivieren aller EPS-Trägerkontexte, die mit der einen oder den mehreren PDN-Verbindung(en) assoziiert sind, durchzuführen; und
eine PDN-Verbindungsverarbeitungsschaltung (221), die konfiguriert ist, um eine oder mehrere UE-angeforderte PDN-Konnektivitätsprozeduren zu initiieren, um PDN-Verbindungen herzustellen, die eine Zusammenarbeit mit 5GS unterstützen;
wobei jede der einen oder mehreren identifizierten PDN-Verbindung(en) mit einem entsprechenden EPS-Träger assoziiert ist, der eine EPS-Träger-ID, im Folgenden auch als EBI bezeichnet, aufweist.

3. Verfahren nach Anspruch 1 oder UE nach Anspruch 2, wobei die identifizierte(n) eine oder mehreren PDN-Verbindung(en) keine PDU-Sitzungs-ID, im Folgenden auch als PSI bezeichnet, -Assoziation aufweisen.

4. Verfahren nach einem der Ansprüche 1 und 3 oder UE nach einem der Ansprüche 2 und 3, wobei das UE eine TAU-Anforderungsnachricht sendet, die EBIs aller EPS-Trägerkontexte umfasst, die mit der einen oder den mehreren PDN-Verbindung(en) assoziiert sind.

5. Verfahren nach einem der Ansprüche 1 und 3 bis 4 oder UE nach einem der Ansprüche 2 bis 4, wobei das UE die eine oder mehreren PDN-Verbindung(en) ohne Senden einer individuellen PDN-Diskonnektivitätsanforderung für jede der einen oder mehreren PDN-Verbindung(en) freigibt.

6. Verfahren nach einem der Ansprüche 1 und 3 bis 5 oder UE nach einem der Ansprüche 2 bis 5, wobei kein EPS-Träger vorhanden ist, nachdem das UE die EPS-Trägerkontexte, die mit der einen oder den mehreren PDN-Verbindung(en) assoziiert sind, lokal deaktiviert hat.

7. Verfahren nach Anspruch 6 oder UE nach Anspruch 6, wobei das UE eine Wiederverbindungsprozedur initiiert, um eine erste PDN-Verbindung herzustellen, die eine Zusammenarbeit mit 5GS unterstützt.

8. Verfahren nach einem der Ansprüche 1 und 3 bis 7 oder UE nach einem der Ansprüche 2 bis 7, wobei das UE die TAU-Prozedur beim Wechsel zwischen Systemen vom A/Gb- oder lu-Modus in den S1-Modus durchführt.

9. Verfahren nach einem der Ansprüche 1 und 3 bis 7 oder UE nach einem der Ansprüche 2 bis 7, wobei das UE die TAU-Prozedur durchführt, nachdem der Wechsel zwischen Systemen vom A/Gb- oder lu-Modus in den S1-Modus abgeschlossen ist.

## Revendications

1. Procédé, comprenant :
l'exécution d'un changement intersystème du mode A/Gb ou lu au mode S1 par un équipement utilisateur, ci-après également appelé UE, dans un réseau de communication mobile, dans lequel l'UE maintient de multiples connexions de réseau de données par paquets, ci-après également appelé PDN, en mode S1 (601) ;
l'identification d'une ou de plusieurs connexions PDN qui ne prennent pas en charge l'interfonctionnement avec 5GS (602) ;
la libération locale des une ou plusieurs connexions PDN et la désactivation de contextes de support de système par paquets évolué, ci-après également appelé EPS, associés aux les une ou plusieurs connexions PDN (603) ;
l'exécution d'une procédure de mise à jour de zone de suivi, ci-après également appelée TAU, avec le réseau pour désactiver tous les contextes de support EPS associés aux les une ou plusieurs connexions PDN (604) ; et
le lancement d'une ou de plusieurs procédures de connectivité PDN demandées par l'UE pour établir des connexions PDN qui prennent en charge l'interfonctionnement avec 5GS (605) ;
dans lequel chacune des les une ou plusieurs connexions PDN identifiées est associée à un support EPS correspondant ayant un ID de support EPS, ci-après également appelé EBI.

2. Équipement utilisateur, ci-après également appelé UE, (201), comprenant :
un circuit de gestion de changement intersystème (223) qui est configuré pour effectuer un changement intersystème du mode A/Gb ou lu au mode S1 dans un réseau de communication mobile, dans lequel l'UE est configuré pour maintenir de multiples connexions de réseau de données par paquets, ci-après également appelé PDN, en mode S1 ;
un circuit de commande (224) qui est configuré pour identifier une ou plusieurs connexions PDN qui ne prennent pas en charge l'interfonctionnement avec 5GS, dans lequel l'UE est configuré pour libérer localement les une ou plusieurs connexions PDN et désactiver des contextes de support de système par paquets évolué, ci-après également appelé EPS, associés aux les une ou plusieurs connexions PDN ;
un circuit de gestion de mobilité (222) qui est configuré pour effectuer une procédure de mise à jour de zone de suivi, ci-après également appelée TAU, avec le réseau pour désactiver tous les contextes de support EPS associés aux les une ou plusieurs connexions PDN ; et
un circuit de gestion de connexion PDN (221) qui est configuré pour lancer une ou plusieurs procédures de connectivité PDN demandées par l'UE pour établir des connexions PDN qui prennent en charge l'interfonctionnement avec 5GS ;
dans lequel chacune des les une ou plusieurs connexions PDN identifiées est associée à un support EPS correspondant ayant un ID de support EPS, ci-après également appelé EBI.

3. Procédé selon la revendication 1 ou UE selon la revendication 2, dans lequel les une ou plusieurs connexions PDN identifiées n'ont pas d'association d'ID de session PDU, ci-après également appelée PSI.

4. Procédé selon l'une quelconque des revendications 1 et 3, ou UE selon l'une quelconque des revendications 2 et 3, dans lequel l'UE envoie un message de demande TAU qui comprend des EBI de tous les contextes de support EPS associés aux une ou plusieurs connexions PDN.

5. Procédé selon l'une quelconque des revendications 1 et 3 à 4, ou UE selon l'une quelconque des revendications 2 à 4, dans lequel l'UE libère les une ou plusieurs connexions PDN sans envoyer de demande de déconnectivité PDN individuelle pour chacune des les une ou plusieurs connexions PDN.

6. Procédé selon l'une quelconque des revendications 1 et 3 à 5, ou UE selon l'une quelconque des revendications 2 à 5, dans lequel aucun support EPS n'existe après que l'UE a désactivé localement les contextes de support EPS associés aux les une ou plusieurs connexions PDN.

7. Procédé selon la revendication 6, ou UE selon la revendication 6, dans lequel l'UE lance une procédure de rattachement pour établir une première connexion PDN qui prend en charge l'interfonctionnement avec 5GS.

8. Procédé selon l'une quelconque des revendications 1 et 3 à 7, ou UE selon l'une quelconque des revendications 2 à 7, dans lequel l'UE effectue la procédure TAU lors du changement intersystème du mode A/Gb ou lu au mode S1.

9. Procédé selon l'une quelconque des revendications 1 et 3 à 7, ou UE selon l'une quelconque des revendications 2 à 7, dans lequel l'UE effectue la procédure TAU après que le changement intersystème du mode A/Gb ou lu au mode S1 est terminé.
